# EUROPEAN PATENT APPLICATION

(11) **EP 4 667 446 A1**
(43) Date of publication of application: **24.12.2025**
(21) Application number: 25183450.3
(22) Date of filing: 17.06.2025
(51) Int. Cl.: C05F 7/00, C05F 11/08

(54) **METHOD FOR PRODUCING A SOIL IMPROVER**

(30) Priority: 20.06.2024 NL 2038003
(71) Applicant: Natural Soil Improvement BV, 6815 HL Arnhem (NL)
(72) Inventor: BADE, Tom, 6815HL Arnhem (NL)
(74) Representative: Verhees, Godefridus Josephus Maria

(57) **Abstract**

Method for producing a soil improver 1 with desired levels of desired nutrients, comprising the composition of a starting material 13 and the addition of additives 15, whereby a river sediment 5 with levels of nutrients is taken as the starting material 13 when composing the starting material. When composing the starting material 13, at least one further river sediment 5 with different nutrient contents from the previously mentioned river sediment is added to the river sediment, in such a way that, by a correct choice of the added river sediment or river sediments and a correct choice of the quantities of the added river sediment or river sediments, the desired nutrient content in the starting material 13 is increased compared to the previous composition of the starting material which contained only one river sediment.

## Description

### Technical field of the invention

The invention relates to a method for producing a soil improver with desired levels of desired nutrients, comprising composing a starting material and the addition of additives, wherein a river sediment with nutrient levels is taken when composing the starting material.

### Background of the invention

WO 2016/182442 A1 discloses a method for producing a soil improver according to the preamble of claim 1. This known method starts from a starting material containing one river sediment, which has been dredged from a river at a location. An additive in the form of mycorrhiza is added to this starting material. The soil improver obtained is relatively cheap and universally applicable, but not specifically produced according to a customer's wishes.

FR 2 710 052 A1 discloses a method for processing sewage sludge into a suitable substance for complete nutrient supply of soils in agriculture and horticulture. This starts from a starting material that contains one sewage sludge, and additives in the form of main and trace nutrients are added to this starting material.

### Summary of the invention

An object of the invention is to provide a method for preparing a soil improver in which fewer additives need to be added to the starting material to obtain the desired minimum levels of desired nutrients than in the known method. To this end, the method according to the invention is characterized in that, when composing the starting material, at least one further river sediment with nutrient contents different from the aforementioned river sediment is added to the river sediment, such that, by a correct choice of the added river sediment or the added river sediments and a correct choice of the quantities of the added river sediment or the added river sediments, the level of desired nutrients in the starting material better approximates the desired level in the soil improver than is the case with the previous composition of the starting material which contained only one river sediment

By not having the starting material consist of one river sediment but of a mixture of different river sediments, it can be ensured that the content of desired nutrients in the starting material is higher than if the starting material contains only one river sediment, so that fewer additives need to be added to the starting material to obtain the desired contents of desired nutrients.

The at least one additional river sediment is preferably selected from several available piles of river sediment. By making the relatively cheap main component of the soil improver as optimal as possible (i.e. containing the desired levels of the desired nutrients as much as possible), no or only a few additional additives, such as relatively expensive inorganic fertilizers, can suffice. By this simple measure, the available piles of river sediment are effectively processed into a soil improver.

An embodiment of the method according to the invention is characterized in that use is made of a computer, which method comprises the following steps:
- entering desired nutrients and desired minimum levels of these desired nutrients into the computer,
- entering a selection criterion into the computer,
- having the computer determine which composition of river sediments best approaches the selection criterion, and
- adding additives to meet the selection criterion.

A further embodiment of the method according to the invention is characterized in that the starting material that best approaches the desired minimum contents of desired nutrients is entered as a selection criterion.

Yet a further embodiment of the method according to the invention is characterized in that the starting material that best approaches the desired minimum content of at least one selected nutrient of the desired nutrients.

A further embodiment of the method according to the invention is characterized in that the computer examines all possible compositions of the selected river sediments, whereby the contents of each river sediment in the composition are varied in steps of x%, and the content of desired nutrients is calculated for each composition.

Preferably, the maximum permitted levels of undesirable substances in the soil improver are also entered in the computer and the computer checks the levels of undesirable substances for each composition and if one or more of these levels are exceeded, this composition is deleted from the possible compositions.

A further embodiment of the method according to the invention is characterized in that during or after mixing the specific quantities of the different river sediments, the mixture of the different river sediments is composted aerobically. The organic components are quickly broken down and disinfected by aerobic composting, so that the production process takes less time, which has a cost-reducing effect. In addition, relatively much heat is produced during aerobic composting, which dries the mixture of river sediment if it is still too moist.

Preferably, 0.5 to 1.5% paper pulp is added to the mixture to bind moisture, which benefits the quality of the soil improver.

Yet a further embodiment of the method according to the invention is characterized in that mycorrhiza and/or one or more of the following living organisms: worms, worm eggs and predatory mites, are added to the starting material. The soil improver thus forms a mini-ecosystem. The soil improver is thus not only a carrier of nutrients as a soil improver, but also of biological control methods in the form of livestock. These living organisms can even be introduced in the form of spores, eggs or larvae, whereby they 'germinate' as it were at the moment they are applied in agriculture.

### Brief description of the drawings

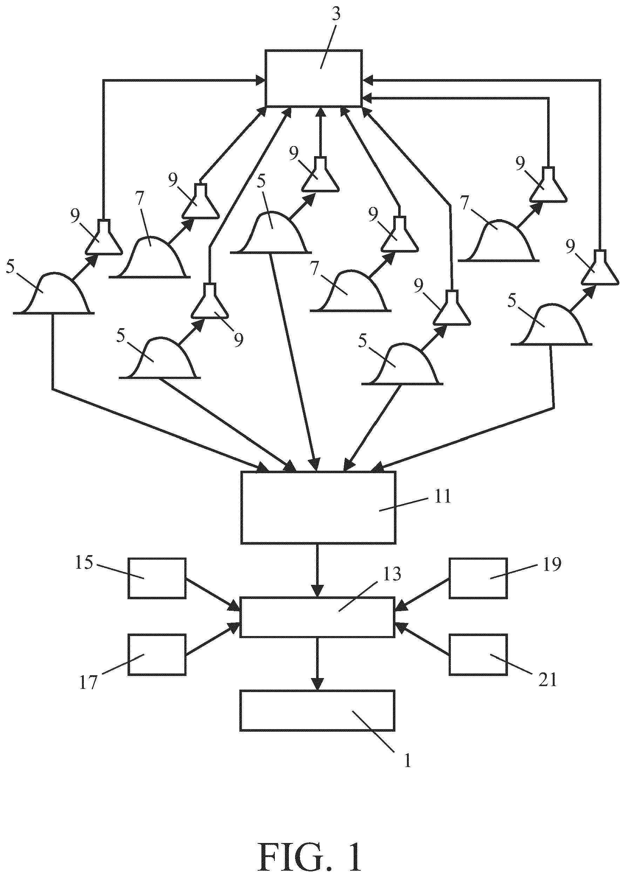

The invention will be explained in more detail below using an exemplary embodiment of the method according to the invention shown in the drawing. In the drawings Figure 1 is a schematic representation of an embodiment of the method according to the invention.

### Detailed description of the drawings

Figure 1 shows a schematic representation of an embodiment of the method according to the invention for processing river sediment 5 into a soil improver 1. Rivers are continuously dredged to keep them passable for shipping. The dredged river sediment is stored on land. The composition of river sediment can differ per river and in a river the river sediment at one location can differ from the river sediment at another location. The piles of river sediment 5 and 7 present at various locations on land are analyzed using suitable analysis equipment 9 and the levels of nutrients and harmful components are measured and entered into a computer 3.

The minimum levels of nutrients in the desired soil improver desired by customers are also entered into the computer 3. Based on the desired nutrients, a selection is made from the various available piles of river sediment 5 and 7 of the piles of river sediment 5 that seem most suitable for composing the soil improver. For example, if five nutrients are desired by the customer, those piles 5 are selected that have the highest concentrations of at least one of these desired nutrients. As a result, a maximum of five piles of river sediment are selected in this example, but this can also be fewer if one or more piles of two or more desired nutrients have the highest concentration. This selection is preferably made by computer 3.

Subsequently, the computer 3 calculates the quantities of each of the selected piles of river sediment 5 in order to obtain a starting material 13 that approximates the desired minimum percentages of the desired nutrients as closely as possible. A calculation method for calculating the contents of each selected pile of river sediment 5 in the starting material 13 is, for example, to calculate the contents of the desired nutrients for all possible combinations of piles of river sediment 5 and then select the combination that best approximates the desired minimum contents of desired nutrients.

One possibility for finding a composition that best approximates the selection criterion is to investigate all possibilities. For example. Suppose that three river sediments have been selected. For the first river sediment, take 10%, 20% ... 100% in succession. For each percentage of the first river sediment, take 10%, 20% ... 100% in succession for the second river sediment. For the third river sediment, take the percentage that is needed to arrive at 100% for all three river sediments. In this way, 1,000 compositions are calculated.

Instead of using steps of 10% to find a composition that meets the selection criterion, smaller steps of e.g. 1% can also be used. In that case, 1 billion compounds need to be assessed.

Then the computer 3 checks whether one or more of the levels of undesirable substances exceed the maximum permitted levels of the calculated optimal starting material 13. If this is the case, this composition is removed from the possible compositions.

After the optimal starting material 13 has been calculated, the selected piles of river sediment 5 are added together in the calculated proportions and mixed and aerobically composted 11 to a homogeneous mixture. The desired amounts of the selected piles of river sediment are added together and this aerobic composting and mixing to a homogeneous mixture is done in a bio-converter through which hot air is blown.

Additives 15 are then added to the starting material 13 obtained in the above manner in order to obtain the desired minimum levels of desired nutrients. The additives can be concentrated nutrients, such as inorganic fertilizers, but also possibly available green waste products with a high content of one or more of the desired nutrients.

To the mixture 0.5 to 1.5% paper pulp 17 is added to bind moisture. A pre-cultivated mycorrhiza 19 is also added to the mixture. The mycorrhiza is selected that belongs to the plant species or tree species for which the soil improver 1 is intended to be used. Finally, one or more of the following living organisms 21 are added: worms, worm eggs and predatory mites.

Although the invention has been explained above using an embodiment, it must be stated that the invention is by no means limited to this embodiment. The invention also extends to all embodiments deviating from this embodiment within the framework defined by the claims.

## Claims

1. Method for producing a soil improver (1) with desired levels of desired nutrients, comprising composing a starting material (13) and the addition of additives (15) thereto, wherein a river sediment with nutrient levels is taken when composing the starting material (13), **characterized in that** when composing the starting material (13) at least one further river sediment (5) with nutrient levels different from the aforementioned river sediment (5) is added to the river sediment (5), such that, by a correct choice of the added river sediment (5) or the added river sediments (5) and a correct choice of the quantities of the added river sediment (5) or the added river sediments, the level of desired nutrients in the starting material (13) better approximates the desired level in the soil improver than is the case with the previous composition of the starting material (13) which contained only one river sediment (5).

2. Method according to claim 1, **characterized in that** the at least one further river sediment (5) is selected from several available piles of river sediment (5, 7).

3. Method according to claim 1 or 2, **characterized in that** use is made of a computer (3), which method comprises the following steps:
- entering desired nutrients and desired minimum contents of these desired nutrients in the computer (3),
- entering a selection criterion in the computer (3),
- having the computer determine which composition of river sediments (5) best approaches the selection criterion, and
- adding additives (15) to meet the selection criterion.

4. Method according to claim 3, **characterized in that** the starting material (13) that best approaches the desired minimum contents of desired nutrients is entered as the selection criterion.

5. Method according to claim 3, **characterized in that** the starting material (13) that best approaches the desired minimum content of at least one selected nutrient of the desired nutrients and that best approaches the desired contents of the other desired nutrients is entered as the selection criterion.

6. Method according to claim 3, 4 or 5, **characterized in that** the computer (3) examines all possible compositions of the selected river sediments (5), whereby the contents of each river sediment (5) in the composition are varied in steps of x%, and the content of desired nutrients is calculated for each composition.

7. Method according to claim 3, 4, 5 or 6, **characterized in that** the maximum permitted levels of undesirable substances in the soil improver (1) are also entered in the computer (3) and the computer (3) checks the levels of undesirable substances for each composition and if one or more of these levels are exceeded, this composition is deleted from the possible compositions.

8. Method according to one of the preceding claims, **characterized in that** during or after mixing the determined amounts of the different river sediments, the mixture of the different river sediments is aerobically composted.

9. Method according to one of the preceding claims, **characterized in that** between 0.5 and 1.5% paper pulp (17) is added to the starting material (13).

10. Method according to one of the preceding claims, **characterized in that** mycorrhiza (19) and/or one or more of the following living organisms (21): worms, worm eggs and predatory mites, are added to the starting material (13).
